# EUROPÄISCHE PATENTSCHRIFT

(11) **EP 1 759 026 B1**
(45) Veröffentlichungstag und Bekanntmachung des Hinweises auf die Patenterteilung: **13.05.2009**
(21) Anmeldenummer: 05749913.9
(22) Anmeldetag: 11.06.2005
(51) Int. Cl.: C22C 9/05

(54) **KORROSIONSBESTÄNDIGE KUPFERLEGIERUNG MIT MAGNESIUM UND DEREN VERWENDUNG**
CORROSION-RESISTANT COPPER ALLOY AND USE THEREOF
ALLIAGES DE CUIVRE RESISTANT A LA CORROSION ET LEUR UTILISATION

(30) Priorität: 23.06.2004 DE 102004030332
(43) Veröffentlichungstag der Anmeldung: 07.03.2007
(73) Patentinhaber: Wieland-Werke AG, 89079 Ulm (DE)
(72) Erfinder: NOLL, Tony, Robert, 89165 Dietenheim (DE); JABS, Thomas, 40667 Meerbusch (DE); GROHBAUER, Adolf, 89075 Ulm (DE)
(86) Internationale Anmeldenummer: PCT/EP2005/006287
(87) Internationale Veröffentlichungsnummer: WO 2006/000307

(56) Entgegenhaltungen:
- US-A- 6 074 499
- US-A- 6 074 499
- PATENT ABSTRACTS OF JAPAN Bd. 1995, Nr. 04, 31. Mai 1995 (1995-05-31) -& JP 07 018354 A (MITSUBISHI ELECTRIC CORP), 20. Januar 1995 (1995-01-20)
- PATENT ABSTRACTS OF JAPAN Bd. 1995, Nr. 09, 31. Oktober 1995 (1995-10-31) -& JP 07 166271 A (MITSUBISHI MATERIALS CORP), 27. Juni 1995 (1995-06-27)
- PATENT ABSTRACTS OF JAPAN Bd. 1995, Nr. 04, 31. Mai 1995 (1995-05-31) -& JP 07 018354 A (MITSUBISHI ELECTRIC CORP), 20. Januar 1995 (1995-01-20)
- PATENT ABSTRACTS OF JAPAN Bd. 1995, Nr. 09, 31. Oktober 1995 (1995-10-31) -& JP 07 166271 A (MITSUBISHI MATERIALS CORP), 27. Juni 1995 (1995-06-27)

## Beschreibung

Die Erfindung betrifft eine korrosionsbeständige Kupferlegierung und deren Verwendung.

Vorbekannt sind Kupferlegierungen mit geringem Magnesiumanteil. Derzeit werden Legierungen unter 1,0 % Mg-Anteil technisch eingesetzt, die, entsprechend dem binären Zustandsschaubild Kupfer-Magnesium, ein homogenes α-Gefüge aufweisen. In Bezug auf die Verarbeitbarkeit werden für Kupfer-Magnesium-Legierungen wegen ihrer großen Erstarrungsintervalls und der Neigung zur Bildung von Magnesiumoxidhäuten beim Schmelzen und Gießen oft Schwierigkeiten gesehen.

Derartige Legierungen lassen sich gut warm- und kaltumformen und werden wegen der gegenüber reinem Kupfer höheren Rekristallisationstemperatur bei etwa 650 °C weichgeglüht. Die Zerspanbarkeit, die bei der heutigen Verwendung dieser Werkstoffe in der Technik jedoch eine untergeordnete Rolle spielt, entspricht etwa derjenigen des unlegierten Kupfers. Das Gleiche trifft für Verbindungsarbeiten durch Löten oder Schweißen zu.

Die Verwendung von CuMg0,4 und CuMg0,7 beschränkt sich im Wesentlichen auf stromführende Freileitungen großer Spannweite und auf Fahrdrähte.

Aus der Druckschrift DE 37 29 509 A1 ist eine Metalllegierung für den Einsatz in elektronischen Bauteilen auf Kupferbasis bekannt, deren Eigenschaften durch zwei unterschiedliche Alterungs-Härtungs-Temperaturintervalle bestimmt werden. Dadurch kann die Legierung bei identischer chemischer Zusammensetzung völlig verschiedene elektrische und mechanische Charakteristika ausbilden. Die Legierung besteht aus 0,05 bis 1,0 % Mg, 0,03 bis 0,9 % P und 0,002 bis 0,04 % Ca, Rest Kupfer.

Aus der Druckschrift JP 07166271 A ist eine gegen Korrosion beständige Kupferlegierung bekannt, bestehend aus Niob und/oder Tantal, Zinn und/oder Zink, Phosphor und zudem noch 0,005 bis 3 % Magnesium. Die Legierung eignet sich zur Verwendung als Wärmeaustauscherrohre.

Kupfer ist auf Grund seiner Stellung in der elektrochemischen Spannungsreihe ein korrosionsbeständiger Werkstoff. Andererseits ist die Beständigkeit gegenüber Medien mit bestimmten korrosiven Inhaltsstoffen, wie z.B. Schweiß und Meerwasser, unzureichend. Dabei bewirken der pH-Wert, der Gehalt an Salzen und Komplexbildnern, dass die Korrosion ungehemmt fortschreitet. Die eingeschränkte Korrosionsbeständigkeit macht sich dann z.B. durch gleichmäßigen Flächenabtrag, Muldenfraß, Lochfraß, verstärkten Abtrag im Spalt, selektiven Angriff einzelner Werkstoffphasen oder interkristallinen Angriff bemerkbar. Erosionskorrosion und Kavitation - als Spezialform der Korrosion - können bei Halbzeug oder Komponenten aus Kupfer und Kupferlegierungen zu einem ungleichmäßigen Abtrag unter Muldenbildung führen.

Der Erfindung liegt daher die Aufgabe zugrunde, eine korrosionsbeständige Legierung weiterzubilden und für den universellen Einsatz in einer Vielzahl von Medien bereitzustellen.

Die Erfindung wird bezüglich der Legierung durch die Merkmale des Anspruchs 1 und bezüglich der Verwendung durch die Merkmale des Anspruchs 7 wiedergegeben. Die weiteren rückbezogenen Ansprüche geben vorteilhafte Aus- und Weiterbildungen der Erfindung wieder.

Die Erfindung schließt die technische Lehre ein, dass die korrosionsbeständige Kupferlegierung aus den folgenden Elementen besteht (in Gew.-%):
2,9 bis 4,0 % Mg,
0,005 bis 1,3 % Si und/oder Al,
und wahlweise eines oder mehrere der weiteren matrixaktiven Elemente:
0,005 bis 10,5 % Zn,
0,005 bis 8,0 % Ni,
0,005 bis 2,6 % Sn, und
wahlweise noch bis 0,3 % Ag, P,
wahlweise noch bis 1,0 % Cr, Ti, Fe
wahlweise noch bis 4,0 % Pb,
Rest Cu und unvermeidbare Verunreinigungen.

Die Erfindung geht dabei von der Überlegung aus, eine hochkorrosionsbeständige Kupfer-Magnesium Legierung mit einem Magnesiumanteil von 2,9 bis 4,0 Gew.-% bereitzustellen. Liegt der Magnesiumgehalt oberhalb der Grenze von 4,0 Gew.-%, so hat sich gezeigt, dass sich beim Gießvorgang fertigungstechnische Schwierigkeiten nicht vermeiden lassen. Insbesondere ab einem Mg-Gehalt von 2,9 Gew.-% bilden sich jedoch intermetallische Verbindungen auf der Basis von Cu₂Mg in einem ausscheidungsfähigen System. Dabei ist eine Ausscheidung von Cu₂Mg-Kristallen inhomogen, die zunächst an den Korngrenzen beginnt und sich erst allmählich in das Innere der Kristalle fortsetzt. Beim Auftreten der Cu₂Mg-Phase tritt, außer einer verbesserten Korrosionsbeständigkeit, eine deutliche Zunahme der Härte auf.

Bei einem Gießvorgang ist zu beachten, dass der Volumenanteil der Cu₂Mg Phase mit Zunahme des Magnesiumgehaltes ebenfalls zunimmt und eine schlechtere thermische Leitfähigkeit besitzt. Damit verbunden ist eine verminderte Wärmeabfuhr im Bereich der Kühlzone. Die weiteren Legierungszusätze begünstigen die Gießbarkeit und die Umformeigenschaften. Als Zusätze sind Zn, Ni, Sn, Si, Al und wahlweise Ag, P, Cr, Ti, Fe und Pb einzeln oder in Kombination vorgesehen. Beim Gießen ist auch zu berücksichtigen, dass Mg eine hohe Sauerstoffaffinität aufweist, was eine Desoxidation der Legierungsschmelze, insbesondere durch Zugabe des Elements P, vor einer Zugabe einer Mg-haltigen Vorlegierung notwendig machen kann. Die Elemente Ti und Cr liefern einen Beitrag zur Kornfeinung und erhöhen wie die Elemente Si und Al die Korrosionsbeständigkeit des Werkstoffs. Zn und Ni sind farbgebende Komponenten der Legierung. Insbesondere ist aus Kostengründen das Element Zn, das auch die Härte der Legierung steigert, in Betracht zu ziehen. Für Seewasseranwendungen werden bevorzugt Ni und Fe als Legierungsbestandteil hinzugefügt. Für Nickel wird dafür ein Anteil von 6,0 bis 8,0 % und für Eisen ein Anteil bis 1,0 % empfohlen. Durch das Element Sn können bei einem Gehalt von 2,0 bis 2,6 % die Gleiteigenschaften verbessert werden. Bezüglich der Zerspanbarkeit führt Si zu einem günstigen Spanbruch.

In bevorzugter Ausgestaltung der Erfindung enthält die korrosionsbeständige Kupferlegierung einen Magnesiumgehalt von 2,9 bis 3,3 %. Hierdurch bilden sich im Gefüge besonders homogene Verteilungen der Phasen aus. Darüber hinaus kann damit im Gussgefüge das Ausmaß an Mikroseigerungen der Legierungsbestandteile vom Kornrand zur Kornmitte auf einem geringen Niveau gehalten werden. Dieser Aspekt ist für die Warm- und Kaltumformbarkeit des Werkstoffs zur Herstellung von Halbzeug von Bedeutung.

In bevorzugter Ausgestaltung der Erfindung sind die Elemente Al, Si bis zu einem Anteil von 1,0 % enthalten. Neben Mg liefern die Elemente Al und Si einen zusätzlichen Beitrag zur Korrosionsbeständigkeit der Legierung.

Um die Zerspanbarkeit wesentlich zu verbessern, kann die Legierung einen Bleigehalt von 2,5 bis 3,5 % enthalten.

Durch das Legieren der Zusatzelemente kann die Metallfarbe und der Farbton gezielt eingestellt werden. Dies ist z.B. bei Anwendungen im Bereich der Bekleidungsindustrie und Architektur von besonderer Bedeutung, weil neben den Korrosionseigenschaften das optische Erscheinungsbild der Metalloberfläche ein wichtiges Kriterium für die Werkstoffauswahl ist.

Für die Anwendung in manchen wässrigen Medien kann es vorteilhaft sein, die weiteren Legierungszusätze, außer Magnesium, nur zu einem geringen Maße einzusetzen, um einen Eintrag ins Medium zu vermeiden. Ein gewisser Ag-Anteil ist allerdings bei Seewasseranwendungen von Vorteil.

Die Erfindung wird nachfolgend beispielhaft, unter Bezugnahme auf konkrete Ausführungsformen, näher erläutert. Elektrolytkupfer wurde in einem widerstandsbeheizten Ofen mit Graphittiegel unter Umgebungsatmosphäre aufgeschmolzen, woraufhin die übrigen Legierungszusätze in den vorherbestimmten Mengen zugesetzt wurden. Die Reihenfolge, mit der die Legierungszusätze zu der Schmelze gegeben wurden, erfolgte mit steigender Affinität zum Sauerstoff. Die Schmelze wurde vor dem Abguss für 15 Minuten auf Temperatur gehalten und mit einem Stab aus Kohlenstoff gut gerührt.

Aus den erhaltenen geschmolzenen Legierungen wurden durch Abguss in eine Kokille Barren mit der Abmessung 25 x 55 x 100 mm hergestellt. Diese Barren wurden auf einer Fräsmaschine spanend bearbeitet, um die Oxidhaut von der Oberfläche zu entfernen. Nach dieser Bearbeitung hatten die Barren das Format 20 x 50 x 100 mm. Diese Metallblöcke wurden anschließend in einem Ofen wieder erwärmt und auf einer Warmwalze bis auf 12 mm heruntergewalzt. Aus diesen Metallblöcken wurden auf einer Säge und Fräse anschließend Prüfkörper mit der Abmessung 10 x 10 x 30 mm hergestellt.

Zur Überprüfung der Korrosionsbeständigkeit wurden die Probenkörper gegenüber künstlichem Schweiß getestet. Die Prüfkörper wurden dazu auf mit künstlichem Schweiß getränktem Filterpapier gelegt und für die Versuchsdauer von 5 Tagen in verschlossenen Petrischalen bei Raumtemperatur aufbewahrt. Zur Herstellung des künstlichen Schweißes wurden

| | | |
|---|---|---|
| 4 | g | Natriumchlorid |
| 3,5 | g | Ammoniumchlorid |
| 1 | g | Harnstoff |
| 3 | ml | Milchsäure |
| 0,5 | ml | Essigsäure |
| 0,5 | ml | Brenztraubensäure |

in 1000 ml Wasser gelöst. Mit Natriumcarbonat wurde ein pH-Wert von 4,7 eingestellt. Die Auflagefläche der Proben war während der Versuchsdauer vollständig mit künstlichem Schweiß benetzt. Die feuchte Atmosphäre um die Proben ließ einen zusätzlichen Korrosionsangriff erwarten.

Der künstliche Schweiß wurde als Prüfmedium ausgewählt, weil mit ihm die Einsatzmöglichkeiten des Werkstoffes für eine Vielzahl an Medien abgeschätzt werden kann. Der künstliche Schweiß zeichnet sich durch einen hohen Gehalt an Salz, einen relativ hohen Gehalt an organischen Bestandteilen, Komplexbildnern, einen niedrigen pH-Wert und einen gewissen Ammoniumgehalt aus. Damit enthält der künstliche Schweiß Inhaltsstoffe, die dafür bekannt sind, dass eine Flächenkorrosion, Lochkorrosion, Entzinkung oder Spannungsrisskorrosion an Kupferwerkstoffen ausgelöst werden kann. Durch die Bildung von kupferoxid- oder carbonathaltigen Deckschichten haben Kupfer und Kupferlegierungen ansonsten eine hohe Korrosionsbeständigkeit. Die Bildung von diesen Deckschichten ist im künstlichen Schweiß gehemmt oder verhindert.

Zur Beurteilung der Korrosionsbeständigkeit wurden die Verfärbungen der Filterpapiere durch Korrosionsprodukte herangezogen. Bereits ein geringer Korrosionsangriff ist durch eine Verfärbung deutlich sichtbar. Bisher ist keine Kupferlegierung bekannt, die im künstlichen Schweiß nicht zu einer Verfärbung des Filterpapiers führt. Im Gegensatz dazu zeigen die erfindungsgemäßen Kupferlegierungen keinen Korrosionsangriff und damit keine Verfärbung des Filterpapiers im künstlichen Schweiß. Daher dient diese Untersuchung zur Abschätzung der Korrosionsbeständigkeit von Legierungen in wässrigen Medien, die im Vergleich zu künstlichem Schweiß weniger oder vergleichbar aggressiv sind. Zu diesen Medien zählen natürlicher Schweiß, Trinkwasser, Meerwasser und die Majorität der Abwässer. Die erfindungsgemäßen Legierungen sind damit für den universellen Einsatz in einer Vielzahl von Medien geeignet.

Gegenüber Kupfer haben Kupfer-Magnesium-Legierungen eine höhere Festigkeit bei statischer und dynamischer Beanspruchung auch bei erhöhten Temperaturen sowie ein besseres Verschleißverhalten. Aus dem Schrifttum ist insbesondere der Zusammenhang zwischen dem verbesserten abrasiven Verschleißwiderstand bei größerer Werkstoffhärte für verschiedene Materialgruppen bekannt. Außerdem nimmt mit größerer Werkstoffhärte der Adhäsionskoeffizient ab. Mit erhöhtem Magnesiumgehalt nimmt auch die Verfestigung durch Kaltumformung entsprechend zu. Für andere Anwendungen kann der Zusatz weiterer Elemente zu einer Erhöhung der Festigkeit und damit zu einer Verbesserung der Erosions- und Kavitationsbeständigkeit führen.

Empfohlen wird die Verwendung der in Ansprüchen 1-6 definierten Kupferlegierung, enthaltend 2,9 bis 4,0 % Mg als korrosionsbeständiger Werkstoff für Bänder, Stangen, Rohre, Drähte und Profile. Die Korrosionsbeständigkeit bezieht sich dabei hauptsächlich auf die Medien Abwasser, Schweiß, Meerwasser, Trinkwasser und Wasserdampf. Die Verwendung sind beispielsweise Behälter, Buchsen, Gleitlager oder Schienen, Steckverbinder, witterungsbeständige Fassaden- oder Dachrinnen, seewasserbeständige Bauteile, Bauteile für die Solar-, Laser-, Elektro- oder Lebensmitteltechnik, für die Luft- und Raumfahrt, Elektrotechnik, Maschinen- und Motorenbau, maritime Technik, Bautechnik, Haushalt, Medizintechnik, Optikanwendungen, Sportartikel oder Bekleidungsaccessoirs.

Alle Angaben bezüglich der Legierungsbestandteile beziehen sich auf Gew.-%.

## Patentansprüche

1. Korrosionsbeständige Kupferlegierung, bestehend aus (in Gew.-%):
2,9 bis 4,0 % Mg,
0,005 bis 1,3 % Si und/oder Al,
und wahlweise einem oder mehreren der weiteren matrixaktiven Elemente:
0,005 bis 10,5 % Zn,
0,005 bis 8,0 % Ni,
0,005 bis 2,6 % Sn, und
wahlweise einzeln oder in Kombination noch bis 0,3 % Ag, P,
wahlweise einzeln oder in Kombination noch bis 1,0 % Cr, Ti, Fe
wahlweise noch bis 4,0 % Pb,
Rest Cu und unvermeidbare Verunreinigungen.

2. Korrosionsbeständige Kupferlegierung nach Anspruch 1, **gekennzeichnet durch** einen Magnesiumgehalt von 2,9 bis 3,3 %.

3. Korrosionsbeständige Kupferlegierung nach einem der Ansprüche 1 bis 2, **dadurch gekennzeichnet, dass** das Element Ni mit einem Anteil von 6,0 bis 8,0 % enthalten ist.

4. Korrosionsbeständige Kupferlegierung nach einem der Ansprüche 1 bis 3, **dadurch gekennzeichnet, dass** das Element Sn mit einem Anteil von 2,0 bis 2,6 % enthalten ist.

5. Korrosionsbeständige Kupferlegierung nach einem der Ansprüche 1 bis 4, **dadurch gekennzeichnet, dass** die Elemente Al, Si einzeln oder in Kombination mit einem Anteil von 1,0 bis 1,3% enthalten sind.

6. Korrosionsbeständige Kupferlegierung nach einem der Ansprüche 1 bis 5, **gekennzeichnet durch** einen Bleigehaft von 2,5 bis 3,5%.

7. Verwendung einer Kupferlegierung gemäß einem der Ansprüche 1 bis 6 als korrosionsbeständiger Werkstoff für Rohre, Bänder, Stangen, Drähte, Profile als Behälter, Buchsen, Gleitlager oder Schienen, Steckverbinder, witterungsbeständige Fassaden- oder Dachrinnen, seewasserbeständige Bauteile, Bauteile für die Solar-, Laser-, Elektro- oder Lebensmitteltechnik, für die Luft- und Raumfahrt, Elektrotechnik, Maschinen- und Motorenbau, maritime Technik, Bautechnik, Haushalt, Medizintechnik, Optikanwendungen, Sportartikel oder Bekleidungsaccessoirs.

8. verwendung einer Kupferlegierung gemäß einem der Ansprüche 1 bis 6 als korrosionsbeständiger Werkstoff für den Zweck nach Anspruch 7.

## Claims

1. Corrosion-resistant copper alloy consisting of (in % by weight):
2.9 to 4.0 % Mg,
0.005 to 1.3 % Si and/or Al,
and, as desired, one or more of the further matrix-active elements:
0.005 to 10.5 % Zn,
0.005 to 8.0 % Ni,
0.005 to 2.6 % Sn, and,
as desired, in addition up to 0.3 % Ag, P, individually or in combination,
as desired, in addition up to 1.0 % Cr, Ti, Fe, individually or in combination,
as desired, in addition up to 4.0 % Pb,
remainder Cu and unavoidable impurities.

2. Corrosion-resistant copper alloy according to claim 1, **characterised by** a magnesium content of 2.9 to 3.3 %.

3. Corrosion-resistant copper alloy according to one of claims 1 and 2, **characterised in that** the element Ni is present in a proportion of 6.0 to 8:0 %.

4. Corrosion-resistant copper alloy according to any one of claims 1 to 3, **characterised in that** the element Sn is present in a proportion of 2.0 to 2.6 %.

5. Corrosion-resistant copper alloy according to any one of claims 1 to 4, **characterised in that** the elements Al, Si, individually or in combination, are present in a proportion of 1.0 to 1.3 %.

6. Corrosion-resistant copper alloy according to any one of claims 1 to 5, **characterised by** a lead content of 2.5 to 3.5 %.

7. Use of a copper alloy according to any one of claims 1 to 6 as a corrosion-resistant material for pipes, strips, rods, wires, profiles as containers, bushes, plain bearings or rails, plug-type connectors, weather-resistant façade drainage channels or roof gutters, seawater-resistant components, components for solar technology, laser technology, electrical engineering or food technology, for the aerospace industry, electrical engineering, mechanical engineering and engine building, maritime engineering, structural engineering, household applications, medical technology, optical applications, sports articles or clothing accessories.

8. Use of a copper alloy according to any one of claims 1 to 6 as a corrosion-resistant material for the purposes according to claim 7.

## Revendications

1. Alliage de cuivre résistant à la corrosion, constitué (en % en poids) de :
2,9 à 4,0% Mg,
0,005 à 1,3% Si et/ou A1,
et, au choix, d'un ou de plusieurs des autres éléments actifs de matrice suivants:
0,005 à 10,5% Zn,
0,005 à 8,0% Ni,
0,005 à 2,6% Sn, et
au choix, individuellement ou en combinaison, en outre jusqu'à 0,3% Ag, P,
au choix, individuellement ou en combinaison, en outre jusqu'à 1% Cr, Ti, Fe,
au choix, en outre jusqu'à 4,0% Pb,
reste Cu et impuretés inévitables.

2. Alliage de cuivre résistant à la corrosion selon la revendication 1, **caractérisé par** une teneur en magnésium de 2,9 à 3,3%.

3. Alliage de cuivre résistant à la corrosion selon l'une des revendications 1 à 2, **caractérisé en ce que** l'élément Ni y est présent avec une teneur de 6,0 à 8,0%.

4. Alliage de cuivre résistant à la corrosion selon l'une des revendications 1 à 3, **caractérisé en ce que** l'élément Sn y est présent avec une teneur de 2,0 à 2,6%.

5. Alliage de cuivre résistant à la corrosion selon l'une des revendications 1 à 4, **caractérisé en ce que** les éléments Al, Si y sont présents individuellement ou en combinaison, avec une teneur de 1,0 à 1,3%.

6. Alliage de cuivre résistant à la corrosion selon l'une des revendications 1 à 5, **caractérisé par** une teneur en plomb de 2,5 à 3,5%.

7. Utilisation d'un alliage de cuivre selon l'une des revendications 1 à 6 en tant que matériau résistant à la corrosion pour tubes, bandes, barres, fils, profilés, aux fins de réservoirs, douilles, paliers lisses ou glissières, connecteurs enfichables, gouttières ou goulottes de toit ou de façade, pièces résistant à l'eau de mer, pièces pour le domaine technique du solaire, du laser, du domaine électrique ou de celui des produits alimentaires, pour l'aéronautique et le domaine aérospatial, l'électrotechnique, la construction de machines et de moteurs, le domaine technique maritime, le domaine technique de la construction, le domaine domestique et médical, des utilisations dans le domaine de l'optique, des articules de sport ou des accessoires de l'habillement.

8. Utilisation d'un alliage de cuivre selon l'une des revendications 1 à 6 en tant que matériau résistant à la corrosion pour les applications selon la revendication 7.
